# EUROPÄISCHE PATENTSCHRIFT

(11) **EP 0 916 180 B1**
(45) Veröffentlichungstag und Bekanntmachung des Hinweises auf die Patenterteilung: **08.10.2003**
(21) Anmeldenummer: 97933690.6
(22) Anmeldetag: 21.07.1997
(51) Int. Cl.: H02P 8/34

(54) **VERFAHREN ZUR SENSORLOSEN SCHRITTERKENNUNG BEI SCHRITTMOTOREN**
SENSORLESS STEP RECOGNITION PROCESS FOR STEPPING MOTORS
PROCEDE DE RECONNAISSANCE SANS CAPTEUR DU PAS DANS DES MOTEURS PAS A PAS

(30) Priorität: 30.07.1996 DE 19630591; 20.12.1996 DE 19653460
(43) Veröffentlichungstag der Anmeldung: 19.05.1999
(73) Patentinhaber: ELMOS Semiconductor AG, 44227 Dortmund (DE)
(72) Erfinder: HARTZSCH, Jörg, D-44149 Dortmund (DE)
(74) Vertreter: Harazim, Eugen, Dipl.-Phys.
(86) Internationale Anmeldenummer: EP9703923
(87) Internationale Veröffentlichungsnummer: WO98005116

(56) Entgegenhaltungen:
- EP-A- 0 046 722
- EP-A- 0 763 884
- US-A- 4 851 755

## Beschreibung

Die Erfindung betrifft ein Verfahren zur sensorlosen Schritterkennung bei Schrittmotoren durch Analyse der Motorbestromung.

Zur Positionsbestimmung von mit Schrittmotoren angetriebenen Systemen sind nach dem Stand der Technik verschiedene Möglichkeiten bekannt. Man kann beispielsweise die Position des angetriebenen Bauteils mittels Absolutwert-Positionssensoren unmittelbar erfassen. Diese Version ist zwar nicht auf Schrittmotoren beschränkt, scheidet jedoch in den meisten Fällen wegen des hohen Material- und Kostenaufwandes aus.

Durch die Eigenschaft von Schrittmotoren, jeweils diskrete Schritte, d.h. Winkelinkremente, auszuführen, kann die Positionsbestimmung einfach dadurch erfolgen, daß von einem räumlich definierten Startpunkt mittels eines elektronischen Zählers die Anzahl der ausgeführten Schritte überwacht, d.h. gezählt wird. Für eine derartige Positionserkennung müssen im wesentlichen die folgenden Voraussetzungen realisiert werden: Zum einen muß der tatsächliche Startpunkt, in der Regel ein Endanschlag, als Ausgangspunkt der Bewegung erkannt werden und zum anderen muß laufend überwacht werden, ob bei jeder Schritt-Motorwicklungsbestromung tatsächlich ein Schritt ausgeführt worden ist.

Diese beiden Voraussetzungen lassen sich mit externen Sensoren, beispielsweise Endschaltern und Kodierscheiben, kontrollieren, was allerdings aufwendig und kostenintensiv ist. Alternativ sind sensorlose Verfahren zur Schritterkennung bekannt, bei dem der Speisestrom oder die Speisespannung während der Bestromung der Motorwicklungen analysiert wird.

Ein derartiges Verfahren und eine Vorrichtung zur Bewegungserkennung eines mehrphasigen Schrittmotors ist beispielsweise aus der DE 40 35 970 A1 bekannt. Darin werden die Spannungen zweier Phasen, d.h. die an den Motorwicklungen anliegenden Spannungen, mittels eines Mikrocomputers ausgewertet. Im einzelnen treten im Blockierfall Spannungseinbrüche bei den Phasenspannungen auf, die registriert werden. Das Verfahren soll zwar gegen Hochfrequenzstörungen unempfindlich sein, weist jedoch eine Reihe anderer Nachteile auf: Die Bewegungserkennung ist nämlich nur an mehrphasigen, unipolaren Schrittmotoren und nicht an bipolaren Schrittmotoren möglich. Außerdem sind die Spannungseinbrüche nur dann meßbar, wenn die Stromquelle relativ hochohmig ist; in der Regel müssen also Shunt-Widerstände eingesetzt werden. Dies bedingt natürlich einen erheblichen Bauteileaufwand und zudem eine ungünstige Energiebilanz aufgrund der am Widerstand umgesetzten Verlustwärme.

In der EP 0 462 050 A1 ist ebenfalls ein Verfahren und eine Schaltung zum Erfassen des Außertrittfallens eines Schrittmotors beschrieben. Der jeweils durch die Motorwicklungen fließende Strom wird an einem Shunt-Widerstand abgegriffen und ausgewertet. Dabei hat man ebenfalls wie in der vorgenannten Druckschrift die Probleme durch die Verwendung des Shunt-Widerstands, Eine weitere Schwierigkeit ist, daß Strommessungen unter bestimmten Betriebsbedingungen, beispielsweise bei Spannungsschwankungen, wie sie häufig in Bordnetzen von Kraftfahrzeugen auftreten, relativ fehleranfällig sind, was nur durch aufwendige Entstör- und Stabilisierungsmaßnahmen ausgeglichen werden kann.

In der EP 0 402 220 A1 und der EP 0 574 339 A 2 sind ebenfalls Verfahren zur Schritterkennung bei Schrittmotoren erläutert, welche allerdings ebenfalls die vorgenannten Unzulänglichkeiten aufweisen.

Daraus ergibt sich die Aufgabe der Erfindung, die vorgenannten Probleme zu vermeiden. Insbesondere soll das Verfahren möglichst störungsunempfindlich sein und sicheren Betrieb bei allen Betriebszuständen gewährleisten. Außerdem sollen unipolare und bipolare Schrittmotoren gleichermaßen einsetzbar sein.

Zur Lösung dieser Probleme schlägt die Erfindung ein Verfahren mit folgenden Verfahrensschritten vor:
- Einprägen eines definierten Stroms auf eine zweite Motorwicklung nach einer Stromrichtungsumkehr Motorwicklungs-Bestromung einer ersten Motorwicklung;
- Hochohmig-Schalten eines Motorwicklungsanschlusses der zweiten Motorwicklung;
- Erfassen des Antwortsignals an dem hochohmig geschalteten Motorwicklungsanschluß;
- Auswerten der Dauer des Antwortsignals.

Bei der Durchführung des erfindungsgemäßen Verfahrens erfolgt eine modulierte Bestromung der einzelnen Motorwicklungen. Vorteile ergeben sich daraus, daß keine Strommessungen vorgenommen werden, wodurch keine Shunt-Widerstände und die zur Auswertung notwendigen Analogkomponenten benötigt werden, so daß die gesamte Schaltung im Gegensatz zu nach dem Stand der Technik bekannten Verfahren vorteilhafter auf einem integrierten Schaltkreis, beispielsweise auf einem ASIC (Application Specific Intergrated Circuit), integrierbar ist.

Im Gegensatz zu nach dem Stand der Technik bekannten Verfahren, die zum Erkennen eines Schrittverlustes den Schwingungszustand, d.h. das sogenannte Toggeln, an einem festen oder elastischen Anschlag benötigen und somit eine Vollblockierung der Welle in einem fixen Zustand nicht erkennen können, ermöglicht das erfindungsgemäße Verfahren eine Erkennung auch solcher Betriebszustände. Dabei ist das erfindungsgemäße Verfahren im Falle des Toggelns am Anschlag wesentlich unempfindlicher gegen leitungsgebundene Störungen.

Im einzelnen wird zur Durchführung des erfindungsgemäßen Verfahrens nach einer Stromrichtungsumkehr der Motorwicklungs-Bestromung einer ersten Motorwicklung, d.h. nach der Beendigung eines Schrittimpulses, auf eine zweite Motorwicklung ein definierter Strom eingeprägt. Der Betrag des Stroms sollte in der Regel kleiner sein als der typische Betriebsstrom. Eine bevorzugte Ausführung des Verfahrens sieht dazu vor, daß die Wicklungsenden lediglich zeitlich definiert miteinander kurzgeschlossen werden. Dadurch wird der Spulenstrom durch den ohmschen Wilderstandsanteil auf einen bestimmten Wert reduziert.

Im nächsten Schritt wird ein Wicklungsende der zweiten Motorwicklung hochohmig geschaltet, d.h. der Stromkreis wird geöffnet und das eine Wicklungsende an den potentialfreien Eingang einer Auswerteelektronik angeschlossen.

Durch ihre Induktivität wird in der hochohmig geschalteten, mit der Auswerteelektronik verbundenen Motorwicklung ein als Antwortsignal bezeichneter Impuls induziert. Die Länge dieses Impulses ist mit dem verwendeten Motortyp und der Betriebsart korreliert. Das erfindungsgemäße Verfahren macht sich diesen Umstand derart zunutze, daß Differenzen in der Dauer der Antwortimpulse bereits als eindeutiger Hinweis auf eine abweichende Rotorposition gewertet werden, d.h. als Schrittverlust.

Die Messung der Zeitdauer des Antwortimpulses erfordert nur einen relativ geringen schaltungstechnischen Aufwand. Dabei ist die Messung im Gegensatz zu absoluten Strommessungen weitgehend unempfindlich gegen Spannungsschwankungen im System und sonstige Störungen.

Nach der Auswertung der Dauer des Antwortsignals wird die zweite Motorwicklung wieder an die Versorgungsleitungen geschaltet, so daß Motorwicklungs-Bestromung je nach Ergebnis der vorangegangenen Auswertung fortgesetzt werden kann. Dabei wird zweckmäßigerweise der Bestromungszyklus unterbrochen, wenn eine Blockierung detektiert wird. Damit kann in elektromechanischen Systemen ein Endschalter eingespart werden; zugleich wird die Lärmbelästigung durch Oszillieren am mechanischen Anschlag sowie mechanische Überlast vermieden.

Vorzugsweise wird bei dem erfindungsgemäßen Verfahren die Motorwicklung gegen Masse (GND) kurzgeschlossen und anschließend nach einem vorgegebenen Zeitintervall die Dauer des High-lmpulses gemessen. Durch den Kurzschluß gegen Masse erfolgt eine störungsfreie Festsetzung des Motorwicklungs-Stroms. In dieser Beschaltung weist das Antwortsignal einen High-Impuls auf, dessen Dauer Aufschluß über den Betriebszustand erlaubt.

Ein Vorzug des erfindungsgemäßen Verfahrens liegt in seiner besonderen Flexibilität, so daß eine Anwendung gleichermaßen vorteilhaft ist bei 1- oder 2-Strang-Bestromung sowie an bipolaren wie auch an unipolaren Schrittmotoren.

Dadurch, daß gegenüber herkömmlichen Analyseverfahren weder Shunt-Widerstände noch andere Analogkomponenten erforderlich sind, bietet sich erstmals die besonders vorteilhafte Möglichkeit, alle Bauelemente der Schaltungsanordnung zur Durchführung des erfindungsgemäßen Verfahrens in einem ASIC zu integrieren. Insbesondere bei der Großserienfertigung ergibt sich ein ausgesprochen günstiger Arbeits-, Material- und Kostenaufwand.

Die erfindungsgemäße Modulation im Bestromungszyklus hat im Vergleich zu den Schrittimpulsen eine so kurze Zeitdauer, daß sich praktisch kein meßbarer Einfluß auf die Drehmomentcharakteristik oder die Laufeigenschaften ergibt.

Eine besonders vorteilhafte Alternative des erfindungsgemäßen Verfahrens ist durch folgende Verfahrensschritte gekennzeichnet:
- Einprägen eines definierten Stroms auf eine Motorwicklung auf ein externes Triggersignal;
- Hochohmig-Schalten eines Motorwicklungsanschlusses der Motorwicklung;
- Erfassen des Antwortsignals an den hochohmig geschalteten Motorwicklungsanschluß;
- Auswerten der Dauer des Antwortsignals.

In dieser Verfahrensaiternative wird der definierte Strom nicht durch die Stromrichtungsumkehr einer Motorwicklung getriggert, sondern duch ein beliebiges externes Triggersignal. Beispielsweise kann dieses Triggersignal von einem Signalgeber stammen, der periodische Impulse abgibt, die je nach den jeweiligen Anforderungen eine höhere oder auch eine niedrigere Frequenz aufweisen können als beispielsweise die typischen Bestromungsimpulse. Der besondere Vorteil ergibt sich daraus, daß das Triggersignal, welches die übrigen Verfahrensschritte einleitet, unabhängig von einer Stromrichtungsumkehr der Motorwicklungs-Bestromung ist und somit auch unabhängig davon, ob der Motor aktiv bestromt wird, d. h. durch die Bestromung ein Antriebsdrehmoment oder ein Haltemoment erzeugt wird. Damit ergibt sich erstmals die Möglichkeit, mittels eines gewöhnlichen Schrittmotors gleich welcher Bauart, auch nichtaktive Motorbewegungen zu erfassen. Dieser Fail liegt regelmäßig dann vor, wenn auf den Motor eine externe Bewegung eingeprägt wird, die von dem vorgesehenen Bestromungsschema abweicht. Hierbei können mehrere Fälle unterschieden werden: Dies ist einmal die Bewegung eines nicht aktiv bestromten Motors von außen. Zweitens erfaßt dies die aufgezwungene Bewegung eines Motors mit Haltebestromung und drittens handelt es sich um von außen aufgezwungene Bewegungen, deren Geschwindigkeit oder Drehsinn von der jeweils vorgegebenen Motorbestromung abweicht.

Die externe Triggerung ermöglicht die Messung der aktuellen Rotorposition mittels des erfindungsgemäßen lmpulsdauer-Meßverfahrens. Dies bedeutet nichts anderes, als daß der Schrittmotor als Drehwinkelgeber betrieben wird. Dabei wird nicht nur die Erfassung der Drehbewegung ermöglicht, sondern anhand der Phasenlage an den einzelnen Spulen auch die Drehrichtung.

Eine weitere, besonders vorteilhafte Alternative des erfindungsgemäßen Verfahrens sieht folgende Verfahrensschritte vor:
- Hochohmig-Schalten eines Motorwicklungsanschlusses, nachdem in der Bestromung einer Motorwicklung eine High-Low-Flanke aufgetreten ist;
- Erfassen des Antwortsignals an dem hochohmig geschalteten Motorwicklungsanschluß;
- Auswerten der Dauer des Anwortsignals.

Im wesentlichen erfolgt die Schritterkennung bei dieser Verfahrensvariante wie zuvor bereits für die Triggerung durch ein externes Triggersignal beschrieben. Im Unterschied dazu erfolgt die Triggerung nunmehr durch eine High-Low-Flanke des Stroms in einer Motorwicklung, wie sie beispielsweise bei einer Stromrichtungsumkehr im Verlauf des Motorbestromungs-Taktzyklus zwangsläufig auftritt. Danach wird zeitverzögert ein beliebiger Motorwicklungsanschluß in der bereits zuvor beschriebenen Weise hochohmig geschaltet, um anschließend den Antwortimpuls zu erfassen und auszuwerten, wie ebenfalls bereits beschrieben.

Wie bei der vorbeschriebenen externen Triggerung hat diese Ausbildung des Verfahrens den Vorteil, das für eine Schritterkennung lediglich eine einzige Motorwicklung genutzt wird. Dabei ist jedoch kein externes Triggersignal erforderlich, es wird vielmehr wie in der an erster Stelle beschriebenen Ausgestaltung des erfindungsgemäßen Verfahrens auf die bei der Motorwicklungsbestromung vorhandenen High-Low-Flanken, die durch die Stromrichtungsumkehr jeweils hervorgerufen werden, zurückgegriffen. Dadurch, daß die bevorzugte Möglichkeit gegeben ist, nach dem Auftreten einer High-Low-Flanke in einer Motorwicklung an derselben Motorwicklung den Antwortimpuls zu erfassen, wobei alle anderen Motorwicklungen vollkommen ungestört bestromt bleiben, ergeben sich als besondere Vorteile, daß die Störabstrahlung geringer ist und außerdem ein geringerer Drehmomentverlust auftritt, als wenn die Erfassung des Antwortsignals an einer zweiten Motorwicklung erfolgt.

Im folgenden wird das erfindungsgemäße Verfahren anhand der Zeichnungen näher erläutert.

Es zeigen im einzelnen:
- Fig. 1: ein typisches Bestromungsschema der Motorwicklungen;
- Fig. 2: den gestrichelt eingezeichneten Zeitausschnitt aus Fig. 1 in vergrößerter Darstellung;
- Fig. 3: den gestrichelt eingezeichneten Zeitausschnitt aus Fig. 1 in vergrößerter Darstellung bei einer zweiten Ausführungsform des erfindungsgemäßen Verfahrens.

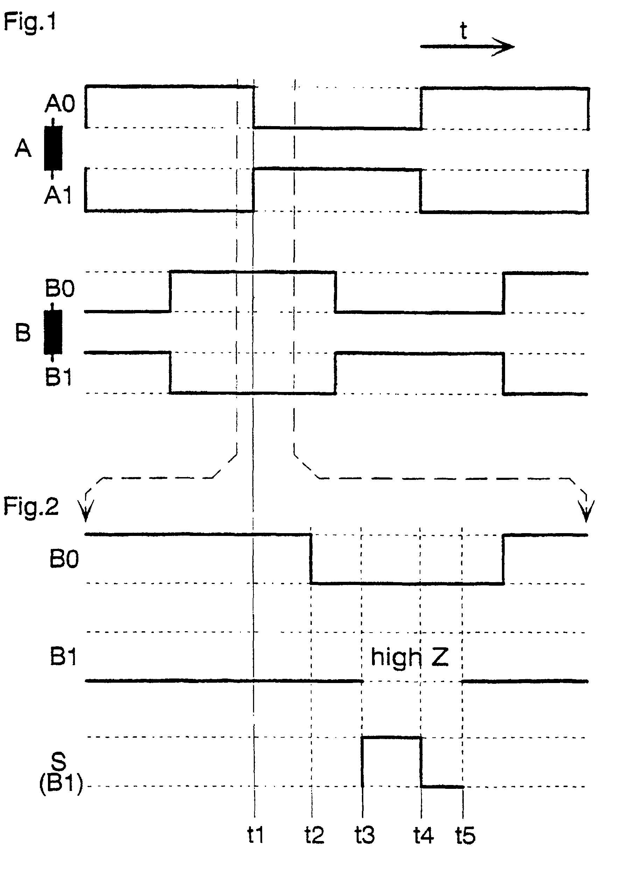

Fig. 1 zeigt das typische Bestromungsschema eines bipolaren Schrittmotors mit 2-Strang-Bestromung im Vollschrittverfahren

Im oberen Teil von Fig. 1 ist neben der schematischen Darstellung einer ersten Motorwicklung A mit den Wicklungsanschlüssen A0 und A1 die Abfolge der Schritt-Bestromungsimpulse über der Zeit t dargestellt. Darunter ist in derselben Form die Bestromung für die zweite Motorwicklung B mit den Anschlüssen B0 und B1 angegeben.

Fig. 2 zeigt in zeitlich gedehnter Darstellung zum einen das Bestromungsschema an den Anschlüssen B0 und B1 der zweiten Motorwicklung B im Bereich der Stromrichtungsumkehr an der ersten Motorwicklung A und zusätzlich den Signalverlauf S, der während der Hochohmig-Schaltung an B1 gemessen wird,

Die Stromrichtungsumkehr der Motorwicklungs-Bestromung der Motorwicklung A erfolgt zum Zeitpunkt t1. Nach einer voreingestellten Verzögerung, zum Zeitpunkt t2 werden die Wicklungsenden B0 und B1 der zweiten Motorwicklung B gegen Masse (GND) kurzgeschlossen. Nach einer weiteren, voreingestellten Verzögerung wird der Anschluß B1 zum Zeitpunkt t3 hochohmig geschaltet, d.h. an dem potentialfreien Eingang einer hochohmigen Meßschaltung. Nunmehr wird an B1 das Signal S erfaßt, welches im dargestellten Beispiel ein High-lmpuls ist. Dieser beginnt zur Zeit t3 und endet zum Zeitpunkt t4. Die Zeitdauer dieses Anwortsignals ist durch den verwendeten Schrittmotor und die Betriebsbedingungen eindeutig definiert.

Zum späteren Zeitpunkt t5 wird die zweite Motorwicklung B wieder an die Bestromungsleitungen angeschlossen, so daß die Bestromung gemäß Fig. 1 fortgesetzt werden kann. Dabei ist das Zeitintervall t1 - t5 kurz gegen die Dauer eines Schrittimpulses, so daß keine Beeinträchtigung des Drehmomentverhaltens oder der Schrittausführung bei dem Schrittmotor auftritt.

Sobald eine Abweichung bei der erfaßten Zeitdauer des Antwortsignals t3 - t4 auftritt, ist dies ein Zeichen dafür, daß bei der vorangegangenen Stromrichtungsumkehr in der ersten Motorwicklung kein vollständiger Schritt ausgeführt wurde, d.h. eine Blockierung vorliegt. Dies kann beispielsweise dann der Fall sein, wenn der Schrittmotor gegen einen Anschlag gefahren ist.

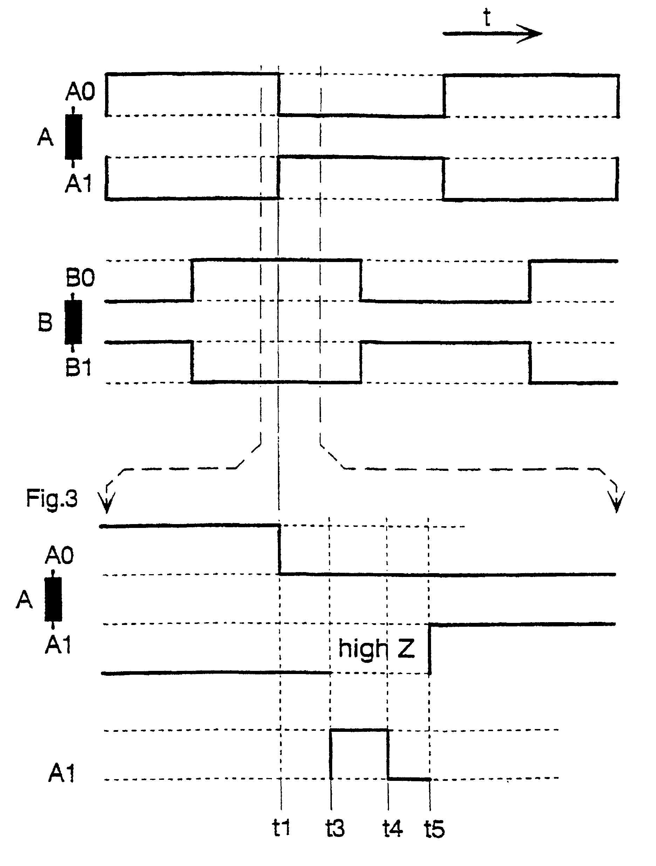

Figur 3 zeigt in derselben Darstellung wie Figur 2 einen Ausschnitt aus dem Bestromungsschema gemäß Figur 1. Im Unterschied zu dem Verfahren gemäß Figur 2 wird nach dem Auftreten einer High-Low-Flanke zum Zeitpunkt t1 am Wicktungsanschluß A0 zum Zeitpunkt t3 der Wicklungsanschluß A1 derselben Motorwicklung A hochohmig geschaltet. Dann wird wiederum zwischen den Zeitpunkten t3 und t4, wie bereits zuvor erläutert, der Antwortimpuls erfaßt. Zu einem späteren Zeitpunkt t5 wird die Wicklungsbestromung der Motorwicklung A wie gewohnt fortgesetzt.

In der zuletzt beschriebenen erfindungsgemäßen Verfahrensweise wird die andere Motorwicklung B vollkommen ungestört bestromt. Dadurch wird während der Erfassung des Antwortimpulses das Drehmoment praktisch nicht verringert; außerdem ist die Störabstrahlung geringer.

Das erfindungsgemäße Verfahren ist gleichermaßen im Voll-, Halb- und Mikroschrittverfahren anwendbar.

Die schaltungstechnische Realisierung des erfindungsgemäßen Verfahrens ist relativ simpel, da keine A-D-Wandler benötigt werden, sondern nur eine einfache impuls-Zählschaltung, die die Messung der Zeitdauer des Antwortimpulses t3-t4 ermöglicht.

## Patentansprüche

1. Verfahren zur sensorlosen Schritterkennung bei Schrittmotoren durch Analyse der Motorbestromung,
**gekennzeichnet durch**
die Verfahrensschritte:
• Einprägen eines definierten Stroms auf eine zweite Motorwicklung nach einer Stromrichtungsumkehr der Motorwicklungs-Bestromung einer ersten Motorwicklung;
• Hochohmig-Schalten eines Motorwicklungsanschlusses der zweiten Motorwicklung;
• Erfassen des Antwortsignals an dem hochohmig geschalteten Motorwicklungsanschluß;
• Auswerten der Dauer des Antwortsignals.

2. Verfahren nach Anspruch 1, **dadurch gekennzeichnet, daß** durch zeitlich definiertes Kurzschließen der Motorwicklung der Strom eingeprägt wird.

3. Verfahren nach Anspruch 1, **dadurch gekennzeichnet, daß** die Motorwicklung gegen Masse (GND) kurzgeschlossen wird und anschließend nach einem vorgegebenen Zeitintervall die Länge des High-lmpulses gemessen wird.

4. Verfahren zur sensorlosen Schritterkennung bei Schrittmotoren durch Analyse der Motorbestromung, **gekennzeichnet durch** die Verfahrensschritte:
• Einprägen eines definierten Stroms auf eine Motorwicklung auf ein externes Triggersignal;
• Hochohmig-Schalten eines Motorwicklungsanschlusses;
• Erfassen des Antwortsignals an dem hochohmig-geschalteten Motorwicklungsanschluß;
• Auswerten der Dauer des Antwortsignals.

5. Verfahren nach Anspruch 4, **dadurch gekennzeichnet, daß** das externe Triggersignal periodisch ist.

6. Verfahren zur sensorlosen Schritterkennung bei Schrittmotoren durch Analyse der Motorbestromung, **gekennzeichnet durch** die Verfahrensschritte:
• Hochohmig-Schalten eines Motorwicklungsanschlusses, nachdem in der Bestromung einer Motorwicklung eine High-Low-Flanke aufgetreten ist;
• Erfassen des Antwortsignals an dem hochohmig geschalteten Motorwicklungsanschluß;
• Auswerten der Dauer des Antwortsignals.

7. Verfahren nach Anspruch 6, **dadurch gekennzeichnet, daß** das Antwortsignal zeitverzögert an einem Motorwicklungsanschluß der Motorwicklung abgegriffen wird, in deren Bestromung zuvor eine High-Low-Flanke aufgetreten ist.

8. Verfahren nach einem der Ansprüche 1, 4 oder 6, **dadurch gekennzeichnet, daß** das Verfahren bei 1-Strang-Bestromung durchgeführt wird.

9. Verfahren nach einem der Ansprüche 1, 4 oder 6, **dadurch gekennzeichnet, daß** das Verfahren bei 2-Strang-Bestromung durchgeführt wird.

10. Verfahren nach einem der Ansprüche 1, 4 oder 6, **dadurch gekennzeichnet, daß** das Verfahren an einem bipolaren Schrittmotor durchgeführt wird.

11. Verfahren nach einem der Ansprüche 1, 4 oder 6, **dadurch gekennzeichnet, daß** das Verfahren an einem unipolaren Schrittmotor durchgeführt wird.

12. Schaltungsanordnung zur Durchführung des Verfahrens nach einem der Ansprüche 1, 4 oder 6, **dadurch gekennzeichnet, daß** sämliche Bauelemente in einem ASIC integriert sind.

## Claims

1. A method for sensor-free step recognition in step motors by analysing the supply of current to the motor, **characterised by** the method steps:
• impressing a defined current upon a second motor winding following a reversal in the current direction of the motor winding current supply of a first motor winding;
• high-impedance connecting of a motor winding connection of the second motor winding;
• detecting the response signal at the motor winding connection connected at high-impedance;
• evaluating the duration of the response signal.

2. A method according to Claim 1, **characterised in that** the current is impressed by time-defined short-circuiting of the motor winding.

3. A method according to Claim 1, **characterised in that** the motor winding is short-circuited in response to mass (GND) and the length of the high-impulse is then measured after a predetermined time interval.

4. A method for sensor-free step recognition in step motors by analysing the supply of current to the motor, **characterised by** the method steps:
• impressing a defined current upon a motor winding following an external trigger signal;
• high-impedance connecting of a motor winding connection;
• detecting the response signal at the motor winding connection connected at high-impedance;
• evaluating the duration of the response signal.

5. A method according to Claim 4, **characterised in that** the external trigger signal is periodic.

6. A method for sensor-free step recognition in step motors by analysing the supply of current to the motor, **characterised by** the method steps:
• high-impedance connection of a motor winding connection after a high-low-flank has occurred in the supply of current to a motor winding;
• detecting the response signal at the motor winding connection connected at high-impedance;
• evaluating the duration of the response signal.

7. A method according to Claim 6, **characterised in that** the response signal is perceived with a time delay at a motor winding connection to the motor winding, in whose supply of current there has previously been a high-low-flank.

8. A method according to one of Claims 1, 4 or 6, **characterised in that** the method is carried out in the presence of 1-line-current supply.

9. A method according to one of Claims 1, 4 or 6, **characterised in that** the method is carried out in the presence of 2-line-current supply.

10. A method according to one of Claims 1, 4 or 6, **characterised in that** the method is carried out on a bipolar step motor.

11. A method according to one of Claims 1, 4 or 6, **characterised in that** the method is carried out on a unipolar step motor.

12. A circuit arrangement for implementation of the method according to one of Claims 1, 4 or 6, **characterised in that** all components are integrated in an ASIC.

## Revendications

1. Procédé pour la détection du pas sans capteur dans des moteurs pas-à-pas par l'analyse du courant du moteur, **caractérisé par** les étapes de procédé:
- application d'un courant défini à un deuxième enroulement de moteur après une inversion de la direction du courant de l'enroulement de moteur d'un premier enroulement de moteur;
- commutation à résistance élevée d'un raccordement d'enroulement de moteur du deuxième enroulement de moteur;
- détection du signal de réponse au raccordement d'enroulement de moteur commuté à résistance élevée;
- évaluation de la durée du signal de réponse.

2. Procédé selon la revendication 1, **caractérisé en ce que** par une mise en court-circuit définie dans le temps de l'enroulement de moteur, le courant est appliqué.

3. Procédé selon la revendication 1, **caractérisé en ce que** l'enroulement de moteur est mis en court-circuit contre la masse (GND) et ensuite, après un intervalle de temps prédéterminé, la longueur de l'impulsion élevée est mesurée.

4. Procédé pour la détection de pas sans capteur dans des moteurs pas-à-pas par l'analyse du courant du moteur, **caractérisé par** les étapes de procédé:
- application d'un courant défini à un enroulement de moteur sur un signal de déclenchement externe;
- commutation à résistance élevée d'un raccordement d'enroulement de moteur;
- détection du signal de réponse au raccordement d'enroulement de moteur commuté à résistance élevée;
- évaluation de la durée du signal de réponse.

5. Procédé selon la revendication 4, **caractérisé en ce que** le signal de déclenchement externe est périodique.

6. Procédé pour la détection de pas sans capteur dans des moteurs pas-à-pas par l'analyse du courant du moteur, **caractérisé par** les étapes de procédé:
- commutation à résistance élevée d'un raccordement d'enroulement de moteur après qu'il s'est produit dans le courant d'un enroulement de moteur un flanc élève-bas;
- détection du signal de réponse au raccordement d'enroulement de moteur commuté à résistance élevée;
- évaluation de la durée du signal de réponse.

7. Procédé selon la revendication 6, **caractérisé en ce que** le signal de réponse est pris, avec un retard de temps, à un raccordement d'enroulement de moteur de l'enroulement de moteur, le courant duquel s'est produit auparavant un flanc élevé-bas.

8. Procédé selon l'une des revendications 1, 4 ou 6, **caractérisé en ce que** le procédé est exécuté lors d'un passage de courant à 1 phase.

9. Procédé selon l'une des revendications 1, 4 ou 6, **caractérisé en ce que** le procédé est exécuté lors d'un passage de courant à 2 phases.

10. Procédé selon l'une des revendications 1, 4 ou 6, **caractérisé en ce que** le procédé est exécuté à un moteur pas-à-pas bipolaire.

11. Procédé selon l'une des revendications 1, 4 ou 6, **caractérisé en ce que** le procédé est exécuté à un moteur pas-à-pas unipolaire.

12. Agencement de commutation pour la mise en oeuvre du procédé selon l'une des revendications 1, 4 ou 6, **caractérisé en ce que** tous les composants sont intégrés dans un ASIC.
